# EUROPEAN PATENT APPLICATION

(11) **EP 4 679 777 A1**
(43) Date of publication of application: **14.01.2026**
(21) Application number: 25188532.3
(22) Date of filing: 09.07.2025
(51) Int. Cl.: H04L 12/40, H04L 12/10

(54) **UNIFIED POWER SUPPLY TRANSMISSION TREE AND RECURSIVE ENERGY ALLOCATION MANAGEMENT OVER DATA LINKS**

(30) Priority: 12.07.2024 US 202418771423
(71) Applicant: Avago Technologies International Sales Pte. Limited, Singapore 768923 (SG)
(72) Inventor: Vladan, Marius Ionel, Oudenaarde 9700 (BE)
(74) Representative: Dilg, Haeusler, Schindelmann Patentanwaltsgesellschaft mbH

(57) **Abstract**

An electronic device includes internal circuitry (230), an upstream port (210) and one or more downstream ports (240). The upstream port (210) is connectable to an upstream cable (i). One or more downstream ports (240) is connectable to respective one or more downstream cables. When the upstream port (210) extracts upstream power from the upstream cable (i), the internal circuitry (230) causes one or more downstream ports (240) to inject deliverable power into respective one or more downstream cables.

## Description

### BACKGROUND

In some complex networks, each device in the network can be connected to a central device. However, these type of networks can require additional cabling, which could increase the cost of deploying networks of this type.

### BRIEF DESCRIPTION OF DRAWINGS

The accompanying drawings, which are incorporated in and form a part of this specification, illustrate examples of the disclosure and, together with the description, explain principles of the examples.
FIGS. 1A and 1B illustrate example power supply wired trees.
FIG. 2A illustrates an example node block diagram for a node.
FIGS. 2B, 2C, 2D and 2E illustrates example upstream ports and downstream ports.
FIG. 2F illustrates example internal circuitry.
FIG. 3 is a flowchart that illustrates an example powering of nodes.
FIG. 4 is a flowchart that illustrates an example of increasing power to a node.
FIG. 5 is a flowchart that illustrates an example of decreasing power to a node.
FIG. 6 is a flowchart that illustrates an example of powering down a node.

In the drawings, like reference symbols and numerals indicate the same or similar components. Like elements in the various figures are denoted by like reference symbols and numerals for consistency. Unless otherwise indicated, like elements and method steps are referred to with like reference numerals.

### DETAILED DESCRIPTION

The following describes technical solutions in this specification with reference to the accompanying drawings. Exemplary embodiments are described in detail with reference to the accompanying drawings.

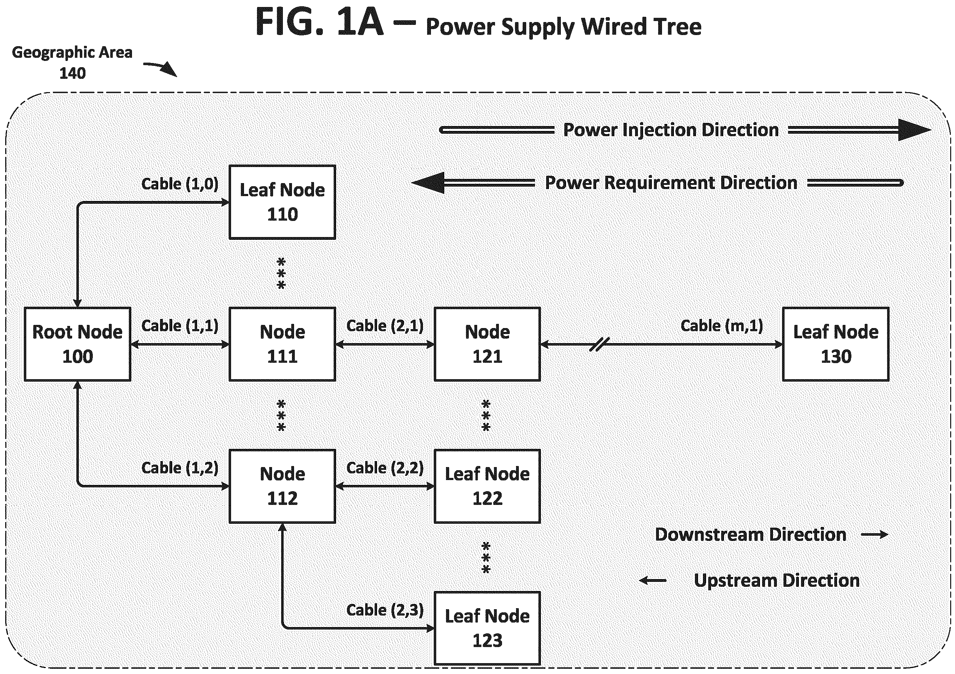

FIG. 1A illustrates an example power supply wired tree. Components of the power supply wired tree in FIG. 1A may include a plurality of nodes and a plurality of cables. The nodes and cables are within a defined geographical area 140.

A node may include a network interface card, a router, a server, a hub, a network switch, a modem, a bridge, an access point, a gateway, and/or mesh network node. The node may include a computing device, a camera, a sensor, a printer, telephone, television set, a set-top box, a set-back box, a media player, a digital video recorder (DVR), a recording device, an appliance (e.g., a washer, dryer, refrigerator, oven and/or other appliance), an internet of things (IOT) device, a power-over-ethernet device and/or a smart vehicle. The node may include any apparatus capable of exchanging data by a cable between the node and another node while simultaneously supplying electric power by cable to and/or receiving electric power by cable from the other node.

Those skilled in the art will appreciate that a branch in the power supply wired tree of FIG. 1A may include a power tree configuration. The power tree configuration is a point-to-point wired link between one node and another node. The example power tree configuration in the power supply wired tree of FIG. 1A may include one or more of the nodes wired in series to root node. A downstream direction in the power tree configuration is from the root node toward any other node. An upstream direction in the power tree configuration is from any node toward root node. As will be explained in detail, a power requirement direction is along the upstream direction and a power injection direction is along the downstream direction.

In the example of FIG. 1A, a root node is the first node of the point-to-point wired link. For example, the plurality of nodes in FIG. 1A may include root node 100. The plurality of nodes may also include at least one leaf node. A leaf node is a final node of the point-to-point wired link. Leaf nodes 110, 122, 123 and 130 in FIG. 1A are examples of such nodes. Although FIG. 1A illustrates four leaf nodes, those skilled in the art will appreciate there may be additional leaf nodes in the power supply wired tree that are not shown in FIG. 1A. Those skilled in the art will also appreciate there may be less than four leaf nodes in the power supply wired tree. The plurality of nodes may also a node that is wired downstream from a root node and upstream from a leaf node. Illustrated in FIG. 1A are nodes 111, 112 and 121. Although the example of FIG. 1A illustrates three nodes, those skilled in the art will appreciate there may be additional nodes in the power supply wired tree that are not shown in FIG. 1A.

As illustrated in FIG. 1A, the plurality of cables (m,n) may include m × n cables, with "m" being an integer of at least 1 and with "n" being another integer of at least 1. A cable (m,n) may include multiple strands of wire. A cable (m,n) may provide a wired connection downstream from root node 100 to a node. For example, cable (1,0) may wire root node 100 to node 110. Cable (1,1) may wire root node 100 to node 111 and cable (1,2) may wire root node 100 to node 112. In the example of FIG. 1A, another cable (m,n) provide a wired connection downstream from the node to a leaf node. For example, cable (2,1) may wire node 111 to node 121. Cable (2,2) may wire node 112 to leaf node 122 and cable (2,3) may wire node 112 to leaf node 123.

Those skilled in the art will appreciate that any specific node in FIG. 1A may be a leaf node in the absence of a cable (m,n) providing a wired connection in the downstream direction from the specific node to any other node. For example, being that no other node is wired downstream from node 110, node 122 and node 123 in the example of FIG. 1A, node 110, node 122 and node 123 may each be a leaf node.

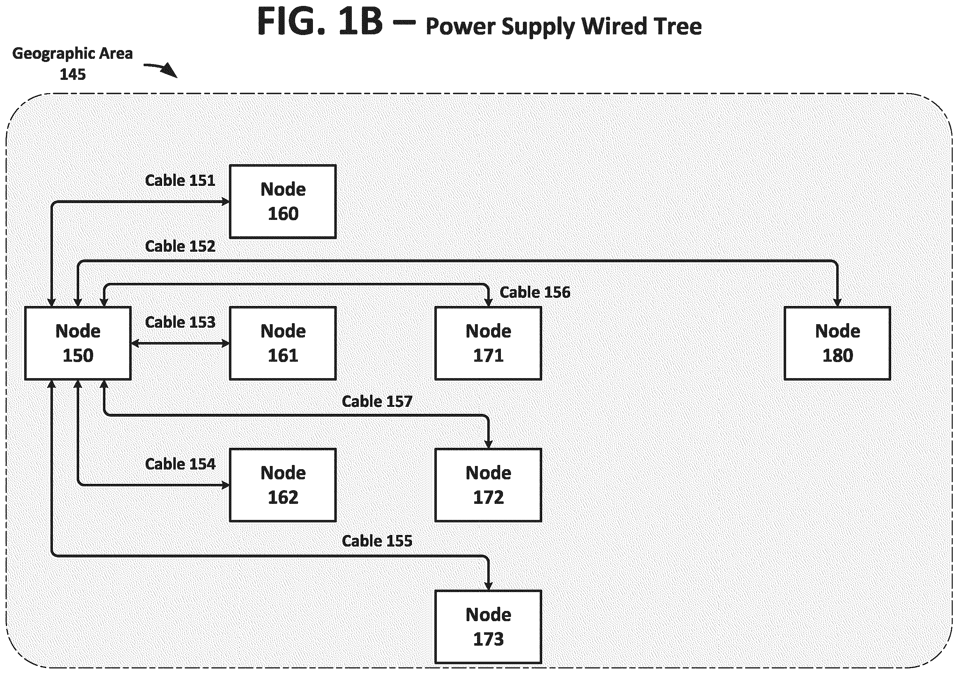

FIG. 1B illustrates another example power supply wired tree. Components of the power supply wired tree in FIG. 1B may include a plurality of nodes and a plurality of cables. The nodes and cables are within geographical area 145. Geographical areas 140 and 145 may be areas of substantially the same size and dimensions. Those skilled in the art will appreciate that a configuration of the power supply wired tree in FIG. 1B may comprise a star configuration, which is a parallel configuration. In the star configuration, a plurality of cables wire node 150 directly to each of the nodes. For example, cable 151 in the example of FIG. 1B may provide a wired connection from node 150 to node 160. Cable 152 may provide a wired connection from node 150 to node 180, cable 153 may provide a wired connection from node 150 to node 161, cable 154 may provide a wired connection from node 150 to node 162, cable 155 may provide a wired connection from node 150 to node 173, cable 156 may provide a wired connection from node 150 to node 171 and cable 157 may provide a wired connection from node 150 to node 172. Those skilled in the art will appreciate that in some examples, portions of the power supply wired tree in FIG. 1A may comprise a star configuration. In comparison with the power supply wired tree of FIG. 1B with the same number of nodes, the power tree configuration of FIG. 1A may allow for fewer required wired electrical connections from root node 100 to the nodes in the power supply wired tree of FIG. 1A than the number of wired electrical connections from node 150 to each of the other nodes in the power supply wired tree of FIG. 1B. Accordingly, the technical solutions in this specification solve a technical problem.

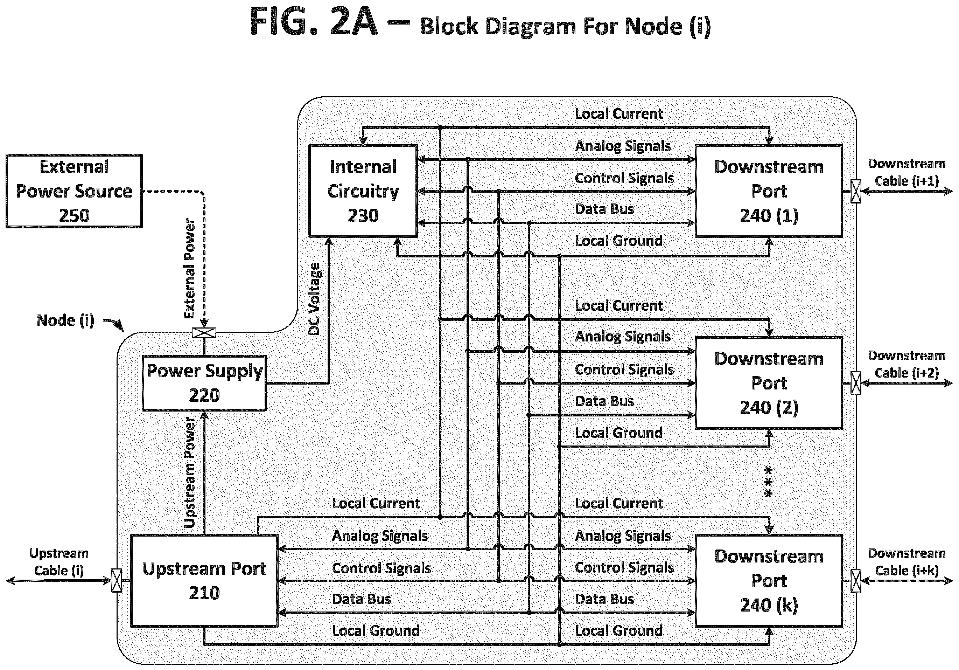

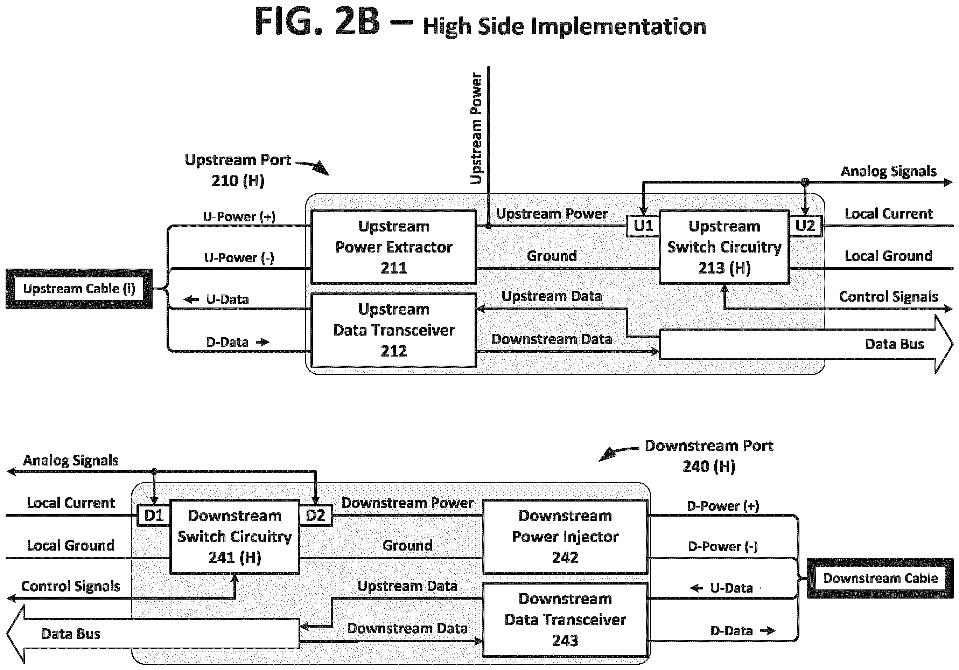

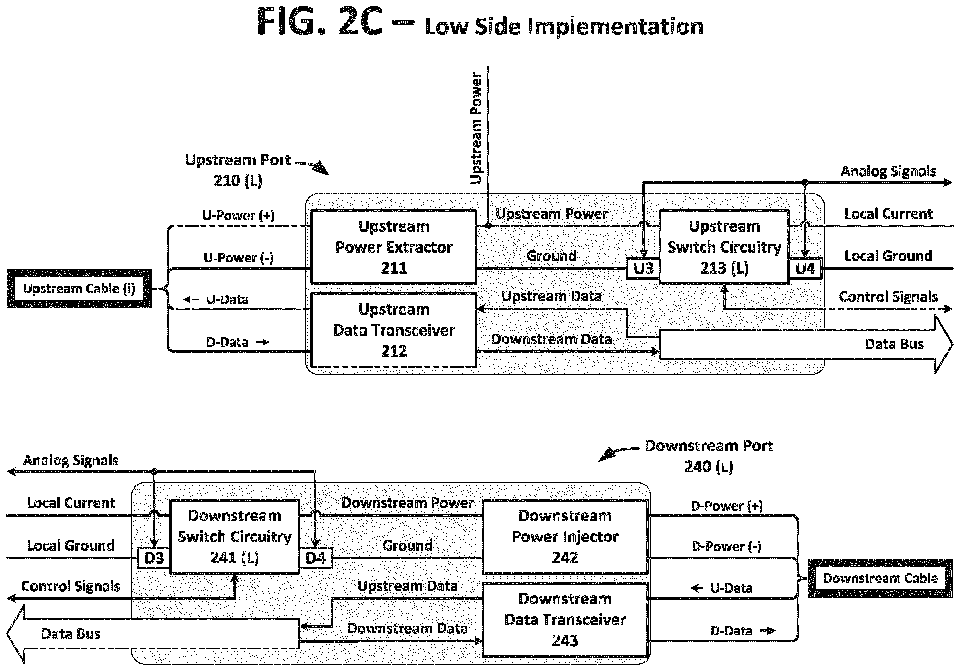

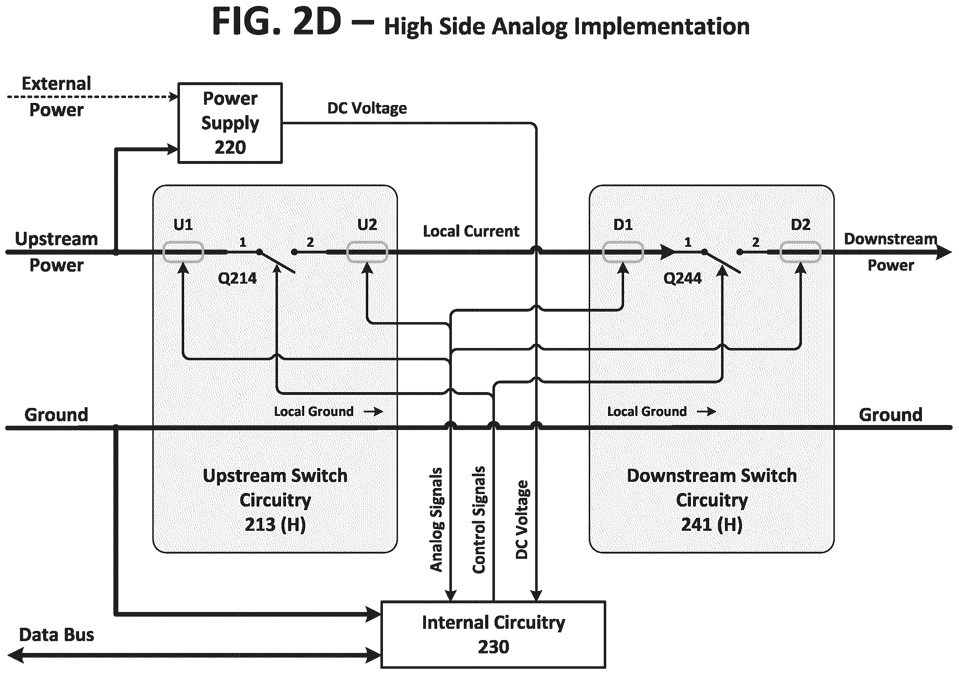

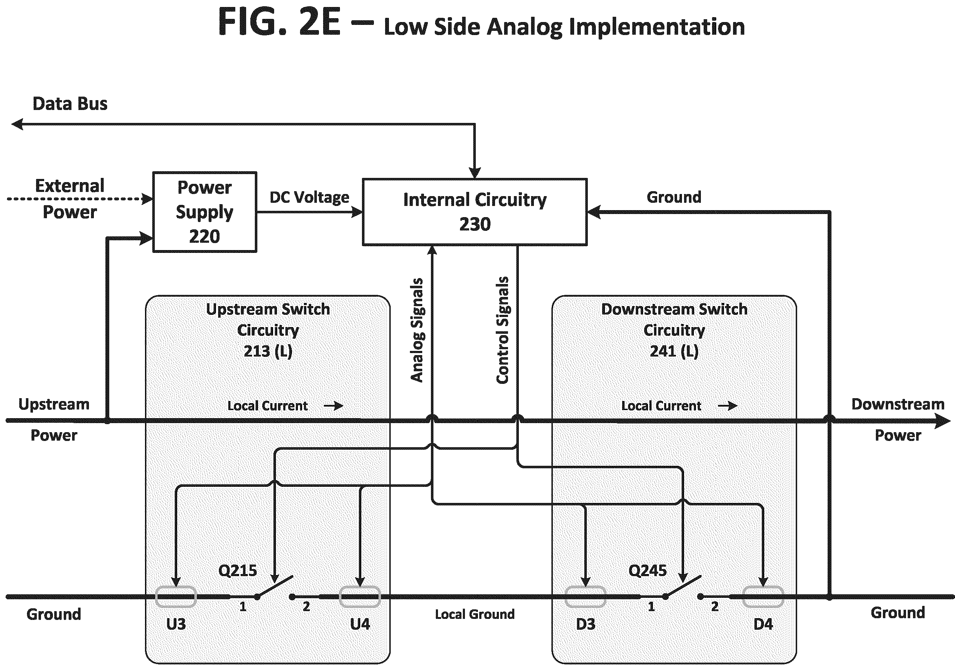

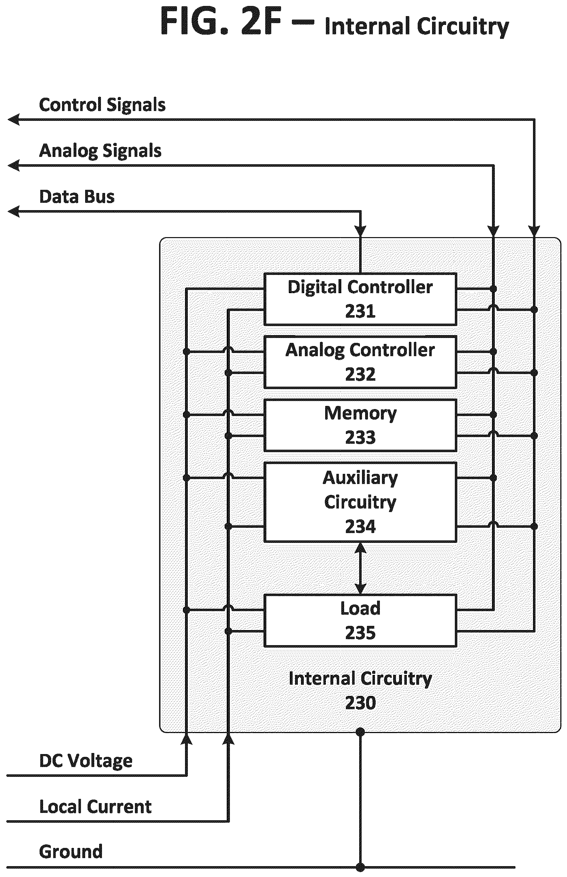

In FIGS. 2A, 2B, 2C, 2D, 2E and 2F, like reference symbols and numerals indicate the same or similar components. Like elements in FIGS. 2A, 2B, 2C, 2D, 2E and 2F are denoted by like reference symbols and numerals for consistency. Unless otherwise indicated, like elements in FIGS. 2A, 2B, 2C, 2D, 2E and 2F are referred to with like reference numerals.

FIG. 2A illustrates an example node block diagram for node (i). Node (i) is a general designation for any of the nodes depicted in the power supply wired tree of FIG. 1A. Those in the art will appreciate that node (i) may be wired to a single downstream node or to multiple downstream nodes. For example, node 111 in FIG. 1A is wired to a single downstream node 121. Node 112 in FIG. 1A is wired simultaneously to leaf nodes 122 and 123. FIG. 1A illustrates the presence of cables (m,n), which may provide electric connections between the various nodes of FIG. 1A.

Node (i) may include upstream port 210, power supply 220 and internal circuitry 230. Upstream port 210 is removably connectable to upstream cable (i). Upstream cable (i) may be a cable (m,n). Those skilled in the art will appreciate there may be additional components in node (i).

Also illustrated in the example of FIG. 2A are one or more downstream ports 240. The one or more downstream ports 240 may include downstream port 240 (1) through downstream port 240 (k), with "k" being an integer of at least 1. A downstream port 240 (1) through downstream port 240 (k) may be configured as any one downstream port 240 in FIGS. 2B, 2C, 2D and 2E. Any downstream cable (i+1) through downstream cable (i+k) may be another cable (m,n).

The downstream ports 240 may each connect to a respective downstream cable. A downstream port 240 is electronic circuitry that may cause the throughput of local current to a respective one or more downstream cables. For example, downstream port 240 (1) is electronic circuitry that may cause the throughput of local current to a respective downstream cable (i+1). Downstream port 240 (2) is electronic circuitry that may cause the throughput of local current to a respective downstream cable (i+2). Downstream port 240 (k) is electronic circuitry that may cause the throughput of local current to a respective downstream cable (i+k).

In the examples of FIG. 2B and FIG. 2C, components of upstream port 210 may include upstream power extractor 211 and upstream data transceiver 212. FIG. 2B may include upstream switch circuitry 213 (H) whereas FIG. 2C may include upstream switch circuitry 213 (L), as will be explained.

Illustrated in FIG. 2A, upstream cable (i) may electrically connect the upstream port 210 to an upstream node. Upstream port 210 may facilitate the transfer of data between node (i) and the upstream node by way of upstream cable (i). As will be explained in detail, upstream port 210 is circuitry that may receive upstream power from the upstream node. Power supply 220 may receive the upstream power from upstream port 210. Power supply 220 may also receive external power. Internal circuitry 230 may receive a DC voltage from the power supply. As will be explained in detail, internal circuitry 230 may output control signals that cause the upstream port 210, the power supply 220 and the downstream ports 240. Internal circuitry 230 may detect analog signals for monitoring the upstream port 210 and downstream port 240 (1) through downstream port 240 (k), as will also be explained in detail.

FIG. 2B illustrates an example high side implementation for upstream port 210 and downstream port 240. FIG. 2C illustrates an example low side implementation for upstream port 210 and downstream port 240.

Upstream port 210 of FIG. 2A is illustrated in FIG. 2B as upstream port 210 (H) and in FIG. 2C as upstream port 210 (L). Both upstream port 210 (H) and upstream port 210 (L) may include upstream cable (i), upstream power extractor 211 and upstream data transceiver 212.

Upstream cable (i) in FIGS. 2B and 2C may provide an electric connection from the upstream node to upstream port 210. FIG. 1A illustrates the presence of cables (m,n), which may provide electric connections between the various nodes of FIG. 1A. Those skilled in the art will appreciate that cables (m,n) may include upstream cable (i).

Upstream power may include positive upstream power (U-Power (+)) and negative upstream power (U-Power (-)). U-Power (+) is of a voltage potential that is higher than the voltage potential for U-Power (-). U-Power (+) and U-Power (-) may simultaneously flow into upstream cable (i) along with upstream data (U-Data) and downstream data (D-Data). Downstream power may include positive upstream power (D-Power (+)) and negative upstream power (D-Power (-)). D-Power (+) is of a voltage potential that is higher than the voltage potential for D-Power (-). D-Power (+) and D-Power (-) may simultaneously flow into the downstream cable along with upstream data (U-Data) and downstream data (D-Data).

The example upstream cable (i) of FIGS. 2B and 2C may include a bundle of wires. The bundle may include two pairs of wires. A pair of wires in the bundle may carry U-Power (+) and U-Power (-) whereas another pair of wires in the bundle may carry U-Data and D-Data. Those skilled in the art will appreciate that a single pair of wires in the bundle may carry U-Power (+), U-Power (-), U-Data and D-Data. By way of the bundle in upstream cable (i), upstream port 210 may receive U-Power (+) and U-Power (-) from the upstream node while simultaneously exchanging U-Data and D-Data with the upstream node. Upstream power may include U-Power (+) and U-Power (-).

Upstream functions may include inserting U-Data onto upstream cable (i), obtaining D-Data from upstream cable (i), and extracting upstream power from the upstream cable (i). For example, upstream port 210 may insert U-Data into the upstream cable (i) while simultaneously receiving upstream power from the upstream cable (i). While simultaneously receiving upstream power from the upstream cable (i), upstream port 210 may obtain D-Data from upstream cable (i). Upstream port 210 may obtain D-Data from upstream cable (i) while simultaneously insert U-Data into the upstream cable (i). Those skilled in the art will appreciate that upstream port 210 simultaneously perform any combination of the upstream functions.

Upstream power extractor 211 in FIGS. 2B and 2C is electronic circuitry that may extract, from upstream cable (i), U-Power (+) and U-Power (-). When extracting U-Power (+) and U-Power (-) from upstream cable (i), upstream power extractor 211 may connect U-Power (-) to ground while extracting U-Power (+) in the form of upstream power.

Along with extracting U-Power (+) and U-Power (-) from upstream cable (i), upstream power extractor 211 may provide polarity reversal protection and back-feed protection. The upstream node may, from time to time, reverse the polarity of U-Power (+) and U-Power (-). When the upstream node reverses the polarity of U-Power (+) and U-Power (-), polarity reversal protection may prevent damage to node (i) from a polarity reversal of the upstream power. Back-feed protection may inhibit the flow of U-Power (+) and U-Power (-) from traveling back through upstream cable (i) to the upstream node.

Upstream data transceiver 212 in FIGS. 2B and 2C is electronic circuitry that may facilitate an exchange of U-Data and D-Data between node (i) and the upstream node. For example, upstream data transceiver 212 may extract U-Data from the data bus in node (i) and insert the U-Data onto upstream cable (i) in the form of U-Data. Upstream data transceiver 212 may additionally extract D-data from upstream cable (i) and insert D-data to the data bus of node (i) in the form of D-Data.

A difference between the example high side implementation for upstream port 210 (H) in FIG. 2B and the example low side implementation for upstream port 210 (L) in FIG. 2C is the configuration of upstream switch circuitry 213. Specifically, upstream switch circuitry 213 (H) in FIG. 2B may cause the throughput of the upstream power into node (i), as will be explained in detail. In addition, upstream switch circuitry 213 (H) of FIG. 2B, may include point U1 and point U2 that are measuring points for the upstream power and local current, respectively. Upstream switch circuitry 213 (L) in FIG. 2C may access ground in node (i), as will be explained in detail. In addition, upstream switch circuitry 213 (L) of FIG. 2B, may include point U3 and point U4 that may permit internal circuitry 230 independently sense ground and local ground at points U3 and U4, respectively.

A downstream port 240 is electronic circuitry that may regulate the throughput of local current to the downstream cable. A downstream port 240 (1) through downstream port 240 (k) may be configured as any one downstream port 240 in FIGS. 2B, 2C, 2D and 2E.

Downstream port 240 of FIG. 2A is illustrated in FIG. 2B as downstream port 240 (H) and in FIG. 2C as downstream port 240 (L). Those skilled in the art will appreciate that the structure and functions of downstream port 240 are equally applicable to any downstream port 240 (1) through downstream port 240 (k). For example, downstream port 240 (H) and downstream port 240 (L) each may route downstream data, ground and local current into the downstream cable. Downstream port 240 (H) and downstream port 240 (L) each may route extract U-Data from the downstream cable. Both downstream port 240 (H) and downstream port 240 (L) may include downstream power injector 242, downstream data transceiver 243 and a downstream cable.

A difference between the example high side implementation for downstream port 240 (H) in FIG. 2B and the example low side implementation for downstream port 240 (L) in FIG. 2C is the configuration of downstream switch circuitry 241. For example, downstream switch circuitry 241 (H) of FIG. 2B, may include point D1 and point D2 that are measuring points for local current and a sense voltage and/or sense current, respectively. As Downstream switch circuitry 241 (L) of FIG. 2C, may include point D3 and point D4 that may permit internal circuitry 230 independently sense local ground and ground at points D3 and D4, respectively.

Downstream power injector 242 in FIGS. 2B and 2C is electronic circuitry that may inject ground and downstream power into the downstream cable. When injecting downstream power into the downstream cable, downstream power injector 242 may inject downstream power into the downstream cable in the form of positive downstream power (D-power (+)). Downstream power injector 242 may connect ground to negative downstream power (D-power (-)) on the downstream cable when infusing ground into the downstream cable. D-power (+) is of a potential that is higher than the potential for D-power (-).

Downstream data transceiver 243 in FIGS. 2B and 2C is electronic circuitry that may facilitate an exchange of U-Data and D-Data between node (i) and the downstream node. For example, downstream data transceiver 243 may extract D-data from the data bus in node (i) and insert downstream data to the downstream cable in the form of D-data. Additionally, downstream data transceiver 243 may extract U-Data from the downstream cable and insert the U-Data onto in the data bus of node (i) in form of U-Data.

D-power (+) and D-power (-) may simultaneously flow into the downstream cable along with U-Data and D-Data. Downstream power may include D-Power (+) and D-Power (-).

Downstream functions may include inserting D-Data onto the downstream cable, obtaining U-Data from the downstream cable, and injecting downstream power onto the downstream cable. For example, downstream port 240 may obtain U-Data from the downstream cable while simultaneously injecting downstream power onto the downstream cable. While simultaneously injecting downstream power onto the downstream cable, downstream port 240 may insert D-Data onto the downstream cable. Upstream port 210 may receive upstream power from the upstream cable (i) while downstream port 240 injects downstream power onto the downstream cable. Downstream port 240 may insert D-Data onto the downstream cable while simultaneously obtaining U-Data from the downstream cable. Downstream port 240 may simultaneously insert D-Data onto the downstream cable while simultaneously injecting downstream power onto the downstream cable. While upstream port 210 inserts U-Data into the upstream cable (i), downstream port 240 may simultaneously insert D-Data onto the downstream cable. Upstream port 210 may obtain D-Data from upstream cable (i) while downstream port 240 simultaneously insert D-Data onto the downstream cable. Those skilled in the art will appreciate that downstream port 240 simultaneously perform any combination of downstream functions. Those skilled in the art will also appreciate that downstream port 240 perform any combination of downstream functions simultaneously with upstream port 210 perform any combination of upstream functions.

A downstream port 240 is removably connectable to the downstream cable (1+k) through downstream cable (i+k). The downstream cable in FIGS. 2B and 2C may be any downstream cable (i+1) through downstream cable (i+k) of FIG. 2A. The downstream cable in FIGS. 2B and 2C may provide an electric connection from downstream port 240 to a downstream node.

The downstream cable may include a bundle of wires. A pair of wires in the bundle may carry D-power (+) and D-power (-) whereas another pair of wires in the bundle may carry U-Data and D-Data. Although two pairs of wires are illustrated the downstream cable of FIGS. 2B and 2C, those skilled in the art will appreciate that a single pair of wires in the downstream cable may carry D-power (+), D-power (-), U-Data and D-Data. By way of the bundle in the downstream cable, downstream port 240 may receive downstream power from the downstream node on some of the wires while simultaneously exchanging U-Data and D-Data with the downstream node.

In the example node block diagram of FIG. 2A, another component of node (i) may include power supply 220. Power supply 220 may receive upstream power from upstream port 210 and may receive external power from external power source 250. The external power from external power source 250 may be AC (alternating current) power or DC (direct current) power. External power source 250 may be a power source that is external to the power supply wired tree of FIG. 1A. Node (i) may be removably connectable to external power source 250. Although external power source 250 may be sited within geographical area 140, those skilled in the art will appreciate that external power source 250 may be sited outside geographical area 140. Similarly, external power source 250 may be sited either within geographical area 145 of FIG. 1A and FIG. 1B or outside geographical area 145. Power supply 220 may convert the external power and/or the upstream power into a DC voltage. Power supply 220 may output the DC voltage at a constant voltage level despite any fluctuation in the load conditions of node (i) and despite any fluctuation in the voltage level of either the external power or the upstream power.

FIG. 2D illustrates an example high side implementation for upstream switch circuitry 213 (H) integrated with downstream switch circuitry 241 (H), power supply 220 and internal circuitry 230. Upstream switch circuitry 213 (H) may include switch Q214 and downstream switch circuitry 241 (H) may include switch Q244. Switch Q214 and switch Q244 may each be implemented as an N-type metal-oxide-semiconductor (NMOS) transistor, a P-type metal-oxide-semiconductor (PMOS) transistor, a junction field effect transistor (JFET), any a Field Effect Transistor (FET), a bipolar transistor, or any other switching device. In the example of FIG. 2D, ground may pass through upstream switch circuitry 213 (H) and downstream switch circuitry 241 (H).

Upstream power may flow into terminal 1 of switch Q214. A signal line may extend from point U1 to internal circuitry 230. The upstream power at point U1 is an analog signal. Internal circuitry 230 may measure upstream power at terminal 1 of switch Q214 when measuring the upstream power on the signal line extending from point U1 to internal circuitry 230.

Internal circuitry 230 may output, to switch Q214, a control signal that causes upstream switch circuitry 213 (H) alternatively permit the throughput of the upstream power into node (i) and inhibit the throughput of the upstream power into node (i). For example, the control signal from internal circuitry 230 to switch Q214 may cause the switching of switch Q214 between an OPEN state and a CLOSED state.

Upstream switch circuitry 213 (H) is in an OPEN state when switch Q214 in the OPEN state. While upstream switch circuitry 213 (H) is in the OPEN state, upstream switch circuitry 213 (H) may inhibit the flow of upstream power through upstream switch circuitry 213 (H). Upstream switch circuitry 213 (H) is in a CLOSED state when switch Q214 in the CLOSED state. While upstream switch circuitry 213 (H) is in the CLOSED state, upstream switch circuitry 213 (H) may permit the flow of upstream power through upstream switch circuitry 213 (H).

Upon flowing through switch Q214, upstream power may become local current. A signal line may extend from point U2 to internal circuitry 230. Local current at point U2 is an analog signal. When measuring local current on the signal line extending from point U2 to internal circuitry 230, internal circuitry 230 may measure local current at terminal 2 of switch Q214.

Local current may flow into terminal 1 of switch Q244. A signal line may extend from point D1 to internal circuitry 230. Local current at point D1 is an analog signal. When measuring local current on the signal line extending from point D1 to internal circuitry 230, internal circuitry 230 may measure local current at terminal 1 of switch Q244.

Internal circuitry 230 may output, to switch Q244, a control signal that causes the switching of switch Q244 between an OPEN state and a CLOSED state. While in the OPEN state, switch Q244 may inhibit the flow of local current through downstream switch circuitry 241 (H). While in the CLOSED state, switch Q244 may permit the flow of local current through downstream switch circuitry 241 (H). Upon flowing through switch Q244, local current may become downstream power.

Internal circuitry 230 may receive, from the signal line extending from point D2 to internal circuitry 230, a sense voltage and/or sense current appearing at the drain of switch Q244. When measuring the sense voltage and/or sense current at point D2, internal circuitry 230 may detect the presence or absence of a downstream node on the downstream cable.

FIG. 2E illustrates an example low side implementation for upstream switch circuitry 213 (L) integrated with downstream switch circuitry 241 (L), power supply 220 and internal circuitry 230. Upstream switch circuitry 213 (L) may include switch Q215 and downstream switch circuitry 241 (L) may include switch Q245. Switch Q215 and switch Q245 may each be implemented as an N-type metal-oxide-semiconductor (NMOS) transistor, a P-type metal-oxide-semiconductor (PMOS) transistor, a junction field effect transistor (JFET), any a Field Effect Transistor (FET), a bipolar transistor, or any other switching device.

In the example of FIG. 2E, upstream power may pass through upstream switch circuitry 213 (L). Upstream switch circuitry 213 (L) may, without altering the upstream power, output upstream power in the form of local current. Downstream switch circuitry 241 (L) may, without altering local current, output local current to the downstream power injector 242 in the form of downstream power.

Local ground may exist at terminal 1 of switch Q215. A signal line may extend from point D3 to internal circuitry 230. Local ground at point D3 is an analog signal. Internal circuitry 230 may measure upstream power at terminal 1 of switch Q215 when measuring ground on the signal line extending from point D3 to internal circuitry 230.

A control signal from internal circuitry 230 to switch Q215 may cause the switching of switch Q215 between an OPEN state and a CLOSED state. Upstream switch circuitry 213 (L) is in an OPEN state when switch Q215 in the OPEN state. While upstream switch circuitry 213 (L) is in the OPEN state, upstream switch circuitry 213 (L) may inhibit access to ground at upstream power extractor 211. Upstream switch circuitry 213 (L) is in a CLOSED state when switch Q215 in the CLOSED state. While in the CLOSED state, upstream switch circuitry 213 (L) may connect ground at upstream power extractor 211 to local ground to in node (i). A signal line extending from point U3 to internal circuitry 230 may facilitate measurement of ground, by internal circuitry 230, at terminal 2 of switch Q215.

Local ground may exist at terminal 1 of switch Q245. A signal line may extend from point D3 to internal circuitry 230. Point D3 may permit measurement of local ground at terminal 1 of switch Q245. A control signal from internal circuitry 230 to switch Q245 may cause the switching of switch Q245 between an OPEN state and a CLOSED state.

While in the OPEN state, switch Q245 may inhibit access to ground through downstream switch circuitry 241 (L). While in the CLOSED state, switch Q245 may permit access to ground through downstream switch circuitry 241 (L). A signal line extending from point D4 to internal circuitry 230 may facilitate measurement of ground, by internal circuitry 230, at terminal 2 of switch Q245.

Illustrated in FIG. 2F is internal circuitry 230. Components of internal circuitry 230 may include digital controller 231, analog controller 232, memory 233, auxiliary circuitry 234, and a load 235. Internal circuitry 230 may receive the DC voltage while being connected to ground.

Digital controller 231 is circuitry that may manage the overall operations of node (i). Digital controller 231 may be implemented as any suitable processing circuitry including, but not limited to at least one of a state machine, a microcontroller, a microprocessor, a single processor and/or a multiprocessor without departing from the scope of the internal circuitry 230 disclosed herein. Digital controller 231 may include at least a central processing unit (CPU), an accelerated processing unit (APU), an application specific integrated circuit (ASIC), field programmable gate arrays (FPGA), or the like.

In some examples, aspects of the technology, including computerized implementations of methods according to the technology, may be implemented as a system, method, apparatus, or article of manufacture using standard programming or engineering techniques to produce software, firmware, hardware, or any combination thereof to control a processor, also referred to as an electronic processor, (e.g., a serial or parallel processor chip or specialized processor chip, a single-or multi-core chip, a microprocessor, a field programmable gate array, any variety of combinations of a control unit, arithmetic logic unit, and processor register, and so on), a computer (e.g., a processor operatively coupled to a memory), or another electronically operated controller to implement aspects detailed herein.

Analog controller 232 is circuitry that may cause the capturing of analog signals at points U1-U4 of upstream port 210 and points D1-D4 of downstream port 240. The analog signals may include upstream power appearing at point U1. The analog signals may include downstream power appearing at any of the points D2 and D4. The analog signals may include upstream power appearing at point U1. The analog signals may include local current appearing at any of the points U2 and D1. The analog signals may include downstream power appearing at point D2. The analog signals may include ground appearing at any of the points U3 and D4. The analog signals may include local ground appearing at any of the points D3 and U4.

Analog circuitry in analog controller 232 may perform measurements on the analog signals. Digital controller 231 may process the measurements when analog controller 232 converts the measurements from analog form into digital form.

Memory 233 may be a non-transitory processor readable or computer readable storage medium. Memory 233 may store filters, rules, data, or a combination thereof. Memory 233 may comprise read-only memory ("ROM"), random access memory ("RAM"), other non-transitory computer-readable media, or a combination thereof. In some examples, memory 233 may store firmware. Memory 233 may store software for node (i). The software for node (i) may include program code. The program code may include program instructions that are readable and executable by internal circuitry 230, also referred to as machine-readable instructions. Memory 233 may be any physical electronic storage device that stores executable instructions and data.

Accordingly, for example, examples of the technology may be implemented as a set of instructions, tangibly embodied on a non-transitory computer-readable media, such that a processor may implement the instructions based upon reading the instructions from the computer-readable media. Some examples of the technology may include (or utilize) a control device such as, e.g., an automation device, a special purpose or programmable computer including various computer hardware, software and/or firmware consistent with the discussion herein. As specific examples, a control device may include a processor, a microcontroller, a field-programmable gate array, a programmable logic controller, logic gates and other typical components that are known in the art for implementation of appropriate functionality (e.g., memory, communication systems, power sources, user interfaces and other inputs).

Auxiliary circuitry 234 is circuitry that may facilitate operational control of any buttons, switches, indicators and other components that are not shown in FIG. 2A. Load 235 is any circuitry that may consume power.

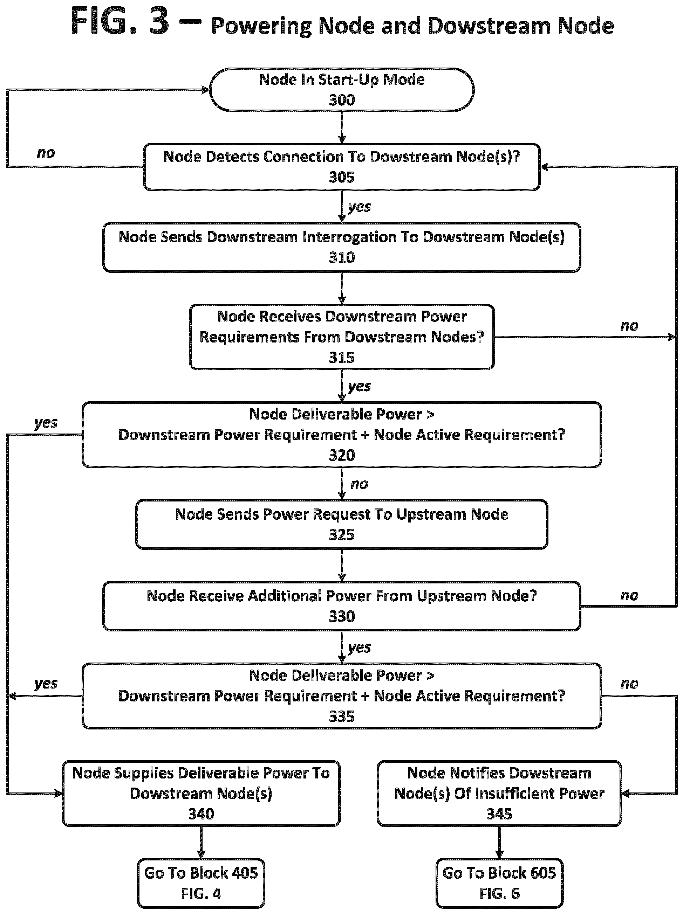

FIGS. 3, 4, 5 and 6 may include a sequence of activities for permitting a node to receive and manage deliverable power. Memory 233, having stored thereon machine-readable instructions that, when executed by internal circuitry 230, causes internal circuitry 230 to perform the sequence of activities in FIGS. 3, 4, 5 and 6.

Deliverable power is the power that node (i) may provide to a sum total of downstream nodes that are electrically connected by downstream cables to node (i). Node (i) may provide the deliverable power into a downstream cable in the form of D-power (+) and D-power (-). The sum total of downstream nodes may be a single downstream node when only one downstream node is electrically connected by a downstream cable to node (i). The sum total of downstream nodes may be a plurality of downstream nodes when multiple downstream nodes are electrically connected to node (i) by downstream cables.

FIGS. 2A, 2B, 2C, 2D, 2E and 2F may illustrate node (i) as an example node of FIGS. 3, 4, 5 and 6. The power wired tree of FIG. 1A may illustrate any of the leaf nodes 122, 123 and 130 as an example downstream node of FIGS. 3, 4, 5 and 6.

In the example of FIGS. 3, 4, 5 and 6, a node active requirement is an amount of electric power necessary for a node to perform its various operations. A node may consume the amount of electric power. The operations may include the management of interactions between the node and the upstream node. The operations may include the management of upstream power, local current and downstream power. The operations may include the management of interactions between the node and any downstream node that is electrically connected downstream from the node by a downstream cable. The operations may include the managing of data, the generation of data, the receipt of data, the inserting of data, and/or any function related to the handling of data. The operations may also include monitoring the flow of data through the node. In the example of FIG. 1A, the power requirement direction for the data flow is along the upstream direction. The operations may include regulating the flow of power through the node. A power injection direction in the example of FIG. 1A is along the downstream direction.

FIG. 3 is a flowchart that illustrates an example powering of a node. In block 300 of FIG. 3, the node may commence in a start-up mode. Upstream switch circuitry 213 is initially in an OPEN state and remain in the OPEN state during block 300. While in the OPEN state, upstream switch circuitry 213 may inhibit the flow of local current into the node. However, upstream port 210 may output upstream power to power supply 220 in block 300, notwithstanding the OPEN state of upstream switch circuitry 213. For all of the downstream ports 240, downstream switch circuitry 241 is initially in an OPEN state and remain in the OPEN state during block 300. Downstream switch circuitry 241, while in the OPEN state, may inhibit the flow of downstream power from the node to any of the downstream nodes that are downstream from the node.

During the start-up mode, upstream port 210 may extract upstream power from upstream cable (i). While in the start-up mode, power supply 220 may provide a DC voltage to the internal circuitry 230. In providing the DC voltage, power supply 220 may receive upstream power directly from upstream port 210 while bypassing upstream switch circuitry 213. The DC voltage may include a portion of the upstream power received directly from upstream port 210. The DC voltage may also include a portion of the external power when power supply 220 receives external power from external power source 250. Thereafter, internal circuitry 230 may advance the processing in FIG. 3 from block 300 to block 305.

In block 305, internal circuitry 230 may monitor each downstream cable to ascertain the absence or presence of an electrical connection to any of the downstream nodes. When internal circuitry 230 monitors any downstream cable, analog controller 232 may conduct a measurement on the sense voltage and/or sense current appearing at point D2 of downstream switch circuitry 241 (H) in any downstream port 240. Similarly, analog controller 232 may conduct a measurement on ground appearing at point D4 of downstream switch circuitry 241 (L) of each downstream port 240 when internal circuitry 230 monitors each downstream cable to ascertain the absence or presence of an electrical connection to any of the downstream nodes.

Internal circuitry 230, when detecting the absence of the downstream power on all of the downstream ports 240, may return the processing from block 305 to block 300. The internal circuitry 230, when detecting an electrical connection to any of the downstream nodes, may advance the processing from block 305 to block 310.

Internal circuitry 230 in block 310 may cause any of the downstream ports 240 on which a downstream node is detected to insert D-Data that includes a downstream interrogation. The downstream interrogation may request a downstream node power requirement from each downstream node receiving the downstream interrogation. The downstream node power requirement is the amount of electric power necessary for the downstream node to perform its various operations. Internal circuitry 230 may advance the processing from block 310 to block 315 when any of the downstream ports 240 insert the downstream interrogation.

In block 315, internal circuitry 230 may monitor any U-Data on each downstream cable to ascertain the receipt of a downstream node power requirement by any of the downstream ports 240. Internal circuitry 230, when determining the absence of a downstream node power requirement from all of the downstream ports 240, may return the processing from block 315 to block 305. Alternatively, internal circuitry 230 may advance the processing from block 315 to block 320 upon detecting the receipt of a downstream node power requirement on any of the downstream ports 240.

In block 320, internal circuitry 230 may aggregate, into a downstream power requirement, a sum total of downstream node power requirements received in block 315. The internal circuitry 230 may also ascertain a node active requirement, which is the amount of electric power necessary for the node to perform its various operations. Deliverable power is the power that the node may provide to a sum total of downstream nodes that are electrically connected by downstream cables to the node. Internal circuitry 230 may compare the deliverable power with the total of the downstream power requirement and the node active requirement. Internal circuitry 230 may advance the processing from block 320 to block 340 when internal circuitry 230 determines, based on the comparison, the amount of deliverable power to be greater than the total of the downstream power requirement and the node active requirement. Alternatively, internal circuitry 230 may advance the processing in FIG. 3 from block 320 to block 325 when, based on the comparison, internal circuitry 230 determines the amount of deliverable power to be less than or equal to total of the downstream power requirement and the node active requirement.

In block 325, internal circuitry 230 may cause the node to output a power request to the upstream node. The power request may include a requested power amount. The requested power amount is the difference between the node active requirement and the amount of deliverable power. In the difference, the minuend is the node active requirement and the amount of deliverable power is the subtrahend. When outputting the power request, control signals from internal circuitry 230 may cause upstream data transceiver 212 to insert the power request to the upstream node in the form of U-Data.

Along with causing the node to insert a power request to the upstream node, internal circuitry 230 may cause upstream switch circuitry 213 to place upstream switch circuitry 213 in a CLOSED state. While upstream switch circuitry 213 is in the CLOSED state, upstream switch circuitry 213 (L) may permit the access to ground through upstream switch circuitry 213 when in a low side implementation and upstream switch circuitry 213 (H) may permit the flow of upstream power through upstream switch circuitry 213 when in a high side implementation. The upstream port 210 of the node may incorporate the power request in U-Data to the upstream node when inserting the power request to the upstream node. When internal circuitry 230 causes the upstream port 210 in the node to insert the power request to the upstream node, internal circuitry 230 may advance the processing in FIG. 3 from block 325 to block 330 after the expiration of a predetermined waiting period.

In block 330, internal circuitry 230 may monitor upstream cable (i) to detect the presence or absence of additional upstream power from the upstream node. When monitoring upstream cable (i), analog controller 232 may conduct a measurement on upstream power appearing at point U1 of upstream switch circuitry 213 (H) or ground appearing at point U3 of upstream switch circuitry 213 (L). Internal circuitry 230 may cause the node to output the measurement to the upstream node. When outputting the measurement, control signals from internal circuitry 230 may cause upstream data transceiver 212 to insert the measurement to the upstream node in the form of U-Data. Confirmation or absence of additional upstream power may be read by transceiver 212 in the form of D-Data from the upstream node. Internal circuitry 230, when receiving information about the absence of the additional upstream power, may return the processing from block 330 to block 305. The internal circuitry 230, when detecting the availability of additional upstream power on the upstream port 210, may place upstream switch circuitry 213 in a CLOSED state and advance the processing from block 330 to block 335.

In block 335, internal circuitry 230 may update the amount of deliverable power to reflect the received amount of available upstream power. Thereafter, internal circuitry 230 may compare the deliverable power with the total of the downstream power requirement and the node active requirement. Internal circuitry 230 may advance the processing from block 335 to block 345 when, based on the comparison, internal circuitry 230 determines the amount of deliverable power to be less than or equal to total of the downstream power requirement and the node active requirement. Alternatively, internal circuitry 230 may advance the processing from block 335 to block 340 when internal circuitry 230 determines, based on the comparison, the amount of deliverable power to be greater than the total of the downstream power requirement and the node active requirement.

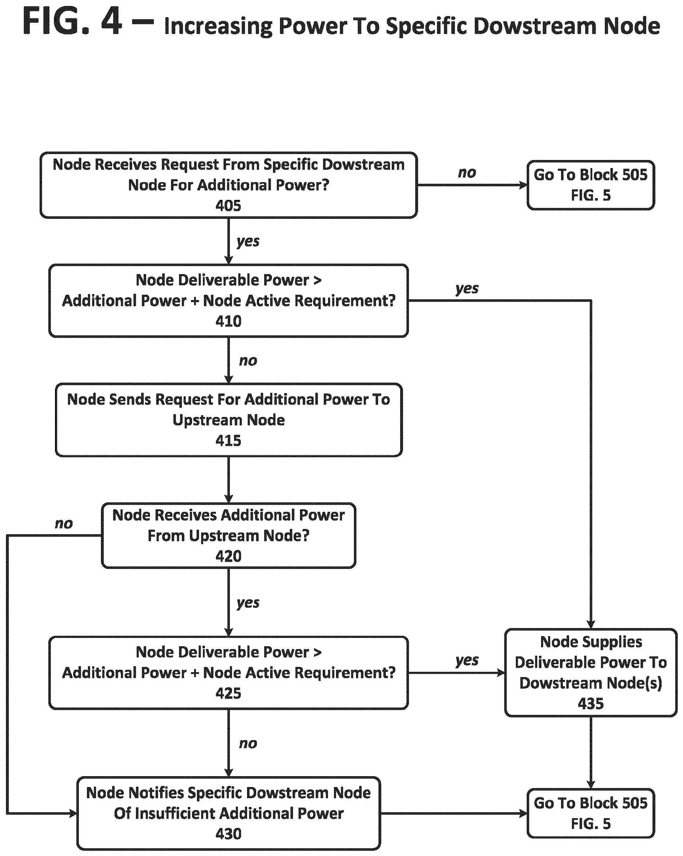

In block 340, internal circuitry 230 may cause any of the downstream ports 240 to permit transmission of the deliverable power into a respective downstream cable. For example, internal circuitry 230 may cause downstream switch circuitry 241 to place downstream switch circuitry 241 in a CLOSED state. While downstream switch circuitry 241 is in a CLOSED state, downstream switch circuitry 241 (L) may permit the downstream cable to access ground through downstream switch circuitry 241 when in a low side implementation and downstream switch circuitry 241 (H) may permit the flow of downstream power through downstream switch circuitry 241 to the downstream cable when in a high side implementation. Downstream port 240 may inject the deliverable power onto each downstream cable for the downstream nodes responding to the interrogation. Upon injecting the deliverable power, internal circuitry 230 may advance the processing in from block 340 to block 405 of FIG. 4.

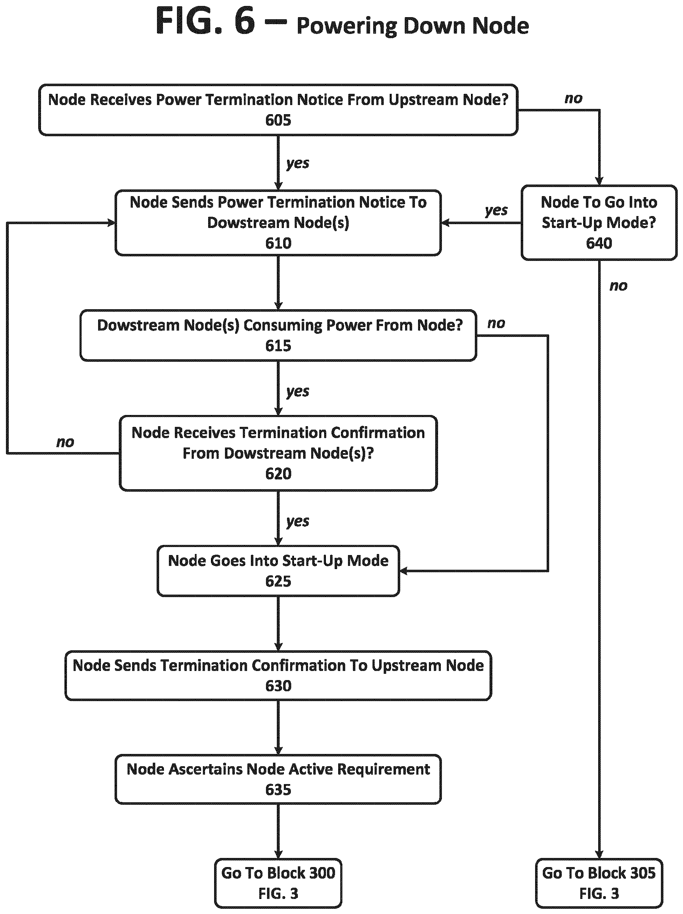

In block 345, internal circuitry 230 may cause the downstream ports 240 to transmit an advisory notifying an insufficient amount of deliverable power. Upon transmitting the advisory, internal circuitry 230 may advance the processing in FIG. 3 from block 345 to block 605 of FIG. 6.

FIG. 4 is a flowchart that illustrates an example of increasing power to a specific downstream node. As will be explained in detail, the increasing of power to the specific downstream node(s) in FIG. 4 may include a sequence of activities for permitting the node to increase the deliverable power to the downstream nodes that are electrically connected by downstream cables to the node.

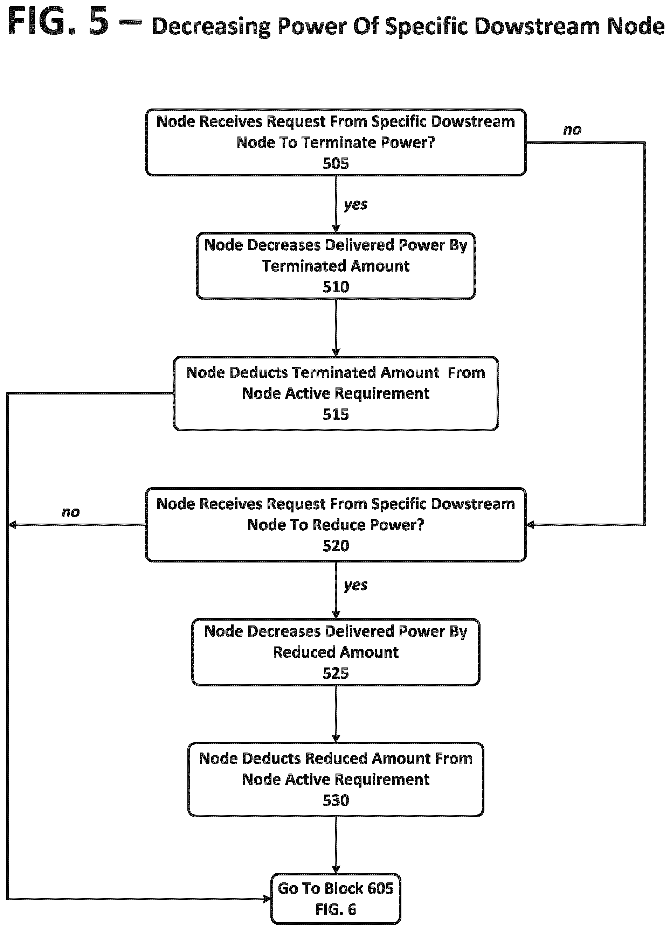

In block 405 of FIG. 4, internal circuitry 230 may monitor each of the downstream cables connecting the node to any of the downstream ports 240 so as to ascertain the receipt, from any of the downstream nodes, of an additional power request. The additional power request is a solicitation from a specific downstream node for additional power. Internal circuitry 230, when determining the absence of the additional power request on any of the downstream ports 240, may advance the processing in FIG. 4 from block 405 to block 505 of FIG. 5. Internal circuitry 230 may advance the processing in FIG. 4 from block 405 to block 410 upon detecting the receipt of the additional power request on any of the downstream cables.

In block 410, internal circuitry 230 may compare the amount of deliverable power with a revised amount of downstream power. The revised amount of downstream power is the sum total of the requisite amount of downstream power and the amount of power in the additional power request. Internal circuitry 230 may advance the processing in FIG. 4 from block 410 to block 435 when, based on the comparison, internal circuitry 230 determines the amount of deliverable power to be greater than the revised amount of downstream power. Alternatively, when internal circuitry 230 determines the amount of deliverable power to be less than or equal to the revised amount of downstream power, internal circuitry 230 may advance the processing in FIG. 4 from block 410 to block 415.

In block 415, internal circuitry 230 may cause the node to insert the additional power request to the upstream node. The additional power request may include a supplementary power amount. The supplementary power amount is the difference between the revised amount of downstream power and the amount of deliverable power. In the difference, the minuend is the revised amount of downstream power and the amount of deliverable power is the subtrahend. The upstream port 210 of the node may incorporate the additional power request in U-Data to the upstream node when inserting the additional power request to the upstream node. When inserting the additional power request, control signals from internal circuitry 230 may cause upstream data transceiver 212 to insert the additional power request to the upstream node. Internal circuitry 230 may advance the processing in FIG. 4 from block 415 to block 420 when internal circuitry 230 causes the upstream port 210 in the node to insert the additional power request to the upstream node after the expiration of a predetermined waiting period.

In block 420, internal circuitry 230 may monitor upstream cable (i) connecting the node to the upstream node so as to detect an increase in the available upstream power at the upstream port 210 of the node or the absence of the increase in the available upstream power. Internal circuitry 230, when detecting the absence of an increase in the available upstream power on the upstream port 210 of the node, may advance the processing in FIG. 4 from block 420 to block 430. Alternatively, internal circuitry 230 may advance the processing in FIG. 4 from block 420 to block 425 when detecting the increase in the available upstream power at the upstream port 210 of the node.

In block 425, internal circuitry 230 may compare the amount of deliverable power with the revised amount of downstream power. Internal circuitry 230 may advance the processing in FIG. 4 from block 425 to block 435 when, based on the comparison, internal circuitry 230 determines the amount of deliverable power to be greater than the requisite amount of downstream power. Alternatively, when internal circuitry 230 determines the amount of deliverable power to be less than or equal to the revised amount of downstream power, internal circuitry 230 may advance the processing in FIG. 4 from block 425 to block 430.

In block 430, internal circuitry 230 may cause the downstream ports 240 to transmit an advisory notifying an insufficient amount of deliverable power. Upon transmitting the advisory, internal circuitry 230 may advance the processing in FIG. 3 from block 430 to block 605 of FIG. 6.

In block 435, internal circuitry 230 may cause any of the downstream ports 240 to permit transmission of the deliverable power into a respective downstream cable. For example, internal circuitry 230 may cause downstream switch circuitry 241 to place downstream switch circuitry 241 in a CLOSED state. While downstream switch circuitry 241 is in a CLOSED state, downstream switch circuitry 241 (L) may permit the downstream cable to access ground through downstream switch circuitry 241 when in a low side implementation and downstream switch circuitry 241 (H) may permit the flow of downstream power through downstream switch circuitry 241 to the downstream cable when in a high side implementation. Downstream port 240 may inject the deliverable power onto each downstream cable for the downstream nodes responding to the interrogation. Upon injecting the deliverable power, internal circuitry 230 may advance the processing in from block 435 to 505 of FIG. 5.

FIG. 5 is a flowchart that illustrates an example of decreasing power to a specific downstream node. As will be explained in detail, the decreasing of power to the specific downstream node(s) in FIG. 5 may include a sequence of activities for permitting the node to decrease the deliverable power to the downstream nodes that are electrically connected by downstream cables to the node.

In block 505 of FIG. 5, internal circuitry 230 may monitor each of the downstream cables connecting the node to any of the downstream ports 240 so as to ascertain receipt, from any of the downstream nodes, of a power termination request. The power termination request is a solicitation from a specific downstream node for a discontinuation of power to the specific downstream node. In the absence of the power termination request received by any of the downstream ports 240, internal circuitry 230 may advance the processing in FIG. 5 from block 505 to block 520. Alternatively, internal circuitry 230 may advance the processing in FIG. 5 from block 505 to block 510 when internal circuitry 230 detects receipt of the power termination request.

In block 510, internal circuitry 230 may decrease power delivered to the specific downstream node by a terminated amount. The terminated amount is the amount of power discontinued to the specific downstream node. Thereafter, internal circuitry 230 may advance the processing in FIG. 5 from block 510 to block 515.

In block 515, internal circuitry 230 may update the amount of delivered power to reflect the decrease the delivered power by the terminated amount. Thereafter, internal circuitry 230 may advance the processing from block 515 in FIG. 5 to block 605 in FIG. 6.

In block 520, internal circuitry 230 may monitor each of the downstream cables connecting the node to any of the downstream ports 240 so as to ascertain receipt, from any of the downstream nodes, of a power reduction request. The power reduction request is a solicitation from a specific downstream node for a reduction of power to the specific downstream node. In the absence of the power reduction request received by any of the downstream ports 240, internal circuitry 230 may advance the processing from block 520 in FIG. 5 to block 605 in FIG. 6. Alternatively, internal circuitry 230 may advance the processing in FIG. 5 from block 520 to block 525 when internal circuitry 230 detects receipt of the power reduction request.

In block 525, internal circuitry 230 may decrease the power delivered to the specific downstream node by a reduced amount. The reduced amount is the amount of power discontinued to the specific downstream node. Thereafter, internal circuitry 230 may advance the processing in FIG. 5 from block 525 to block 530.

In block 530, internal circuitry 230 may update the amount of delivered power to reflect the decrease in the delivered power by the reduced amount. The delivered power is the total downstream power that the node delivers to the downstream nodes. The total downstream power is based on an expected maximum power required by the total number connected downstream nodes. Thereafter, internal circuitry 230 may advance the processing from block 530 in FIG. 5 to block 605 in FIG. 6.

FIG. 6 is a flowchart that illustrates an example of powering-off the node. As will be explained in detail, the powering-off of downstream node in FIG. 6 may include a sequence of activities for placing the node into a start-up mode.

In block 605 of FIG. 6, internal circuitry 230 may monitor upstream cable (i) connecting the node to the upstream node to ascertain receipt, by the upstream port 210 of the node of a power termination notice. Control signals from internal circuitry 230 may cause upstream data transceiver 212 may extract the power termination notice from upstream cable (i). The power termination notice advises the node of a cessation of the upstream power. In the absence of the upstream port 210 receiving the power termination notice, internal circuitry 230 may advance the processing in FIG. 6 from block 605 to block 640. Alternatively, internal circuitry 230 may advance the processing in FIG. 6 from block 605 to block 610 when internal circuitry 230 detects receipt of the power termination notice.

In block 610, internal circuitry 230 may cause the downstream ports 240 to insert the power termination notice to each downstream node(s) detected as electrically connected to the node. The power termination notice advises the downstream node(s) of the cessation of the upstream power. When any of the downstream ports 240 insert the power termination notice, internal circuitry 230 may advance the processing in FIG. 6 from block 610 to block 615 after the expiration of a predetermined waiting period.

In block 615, internal circuitry 230 may monitor each of the downstream cables connecting the node to any of the downstream ports 240 so as to detect a consumption of the downstream power on any of the downstream ports 240. When detecting the consumption of the downstream power, the internal circuitry 230 may measure the sense voltage and sense current. When monitoring the downstream cables, internal circuitry 230 may measure the sense voltage and sense current at point D2 in downstream switch circuitry 241 (H). Alternatively, internal circuitry 230 may measure the sense voltage and sense current at point D4 in downstream switch circuitry 241 (L) when monitoring the downstream cables. The sense voltage and sense current may indicate the presence or absence of a downstream node on the downstream cable. In the absence of detecting the consumption of the downstream power, internal circuitry 230 may advance the processing in FIG. 6 from block 615 to block 625. Alternatively, when internal circuitry 230 detects the consumption of the downstream power, internal circuitry 230 may advance the processing in FIG. 6 from block 615 to block 620.

In block 620, internal circuitry 230 may monitor each of the downstream cables connecting the node to any of the downstream nodes to ascertain the receipt of the termination confirmation by any of the downstream ports 240. Internal circuitry 230, when determining the absence of the termination confirmation on any of the downstream ports 240, may return the processing in FIG. 6 from block 620 to block 610. Internal circuitry 230 may advance the processing in FIG. 6 from block 620 to block 625 upon detecting the receipt of the termination confirmation on any of the downstream ports 240.

In block 625 of FIG. 6, the node may go into the start-up mode. In the start-up mode, start-up supply in power supply 220 may provide a start-up voltage to the main supply. The main supply may provide, as a DC voltage, the start-up voltage to internal circuitry 230 when the main supply receives the start-up voltage. Thereafter, internal circuitry 230 may advance the processing in FIG. 6 from block 625 to block 630.

In block 630, internal circuitry 230 may cause the upstream port 210 to insert a termination confirmation to the upstream node. The termination confirmation is an acknowledgement of the cessation of the upstream power. When inserting the termination confirmation, control signals from internal circuitry 230 may cause upstream data transceiver 212 to insert the termination confirmation to the upstream node. When the upstream port 210 inserts the termination confirmation, internal circuitry 230 may advance the processing in FIG. 6 from block 630 to block 635.

In block 635, internal circuitry 230 may ascertain the node active requirement. Internal circuitry 230 may return the processing from block 635 of FIG. 6 to block 300 of FIG. 3 when internal circuitry 230 ascertains the node active requirement.

In the absence of the upstream port 210 receiving the power termination notice, internal circuitry 230 may advance the processing in FIG. 6 from block 605 to block 640. In block 640, internal circuitry 230 may determine whether or not the node is to go into the start-up mode. Internal circuitry 230 may advance the processing in FIG. 6 from block 640 to block 610 determines the node as going into the start-up mode. Otherwise, internal circuitry 230 may return the processing from block 640 of FIG. 6 to block 305 of FIG. 3.

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C. In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application). Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology. Rather, the use of ordinal numbers is to distinguish between the elements. By way of an example, a first element is distinct from a second element, and the first element may encompass more than one element and succeed (or precede) the second element in an ordering of elements. Thus, a first member, component, region, layer, or section referred to in examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and after an understanding of the disclosure of this application. Terms, such as those defined in commonly used dictionaries, are to be interpreted as having a meaning that is consistent with their meaning in the context of the relevant art and the disclosure of this application.

Although the present technology has been described by referring to certain examples, workers skilled in the art will recognize that changes may be made in form and detail without departing from the scope of the discussion.

## Claims

1. An electronic device comprising:
one or more downstream ports (240), each of the one or more downstream ports (240) configured to connect to a respective one or more downstream cables;
an upstream port (210) connectable to an upstream cable (i); and
internal circuitry (230) configured to cause, when the upstream port (210) extracts upstream power from the upstream cable (i), the one or more downstream ports (240) to inject deliverable power into the respective one or more downstream cables.

2. The electronic device of claim 1, wherein the internal circuitry (230) is configured to detect an absence of a downstream node on the respective one or more downstream cables.

3. The electronic device of claim 2, wherein the internal circuitry (230) is configured to detect a presence of the downstream node on the respective one or more downstream cables.

4. The electronic device of any of claims 1 to 3, wherein an amount of available upstream power comprises an amount of the deliverable power.

5. The electronic device of claim 4, comprising at least one of the following features:
wherein the amount of the available upstream power comprises an amount of electric power consumable by the electronic device;
wherein the internal circuitry (230) is configured to cause the upstream port (210) to insert upstream data onto the upstream cable (i) while the upstream port (210) extracts the upstream power.

6. The electronic device of any of claims 1 to 5, wherein the internal circuitry (230) is configured to cause the upstream port (210) to obtain downstream data from the upstream cable (i) while the upstream port (210) extracts the upstream power.

7. The electronic device of claim 6, wherein the internal circuitry (230) is configured to cause the one or more downstream ports (240) to insert the downstream data onto the respective one or more downstream cables while the one or more downstream ports (240) injects the deliverable power onto the respective one or more downstream cables.

8. The electronic device of claim 7, wherein the internal circuitry (230) is configured to cause the one or more downstream ports (240) to extract upstream data from the respective one or more downstream cables while the one or more downstream ports (240) injects the deliverable power onto the respective one or more downstream cables.

9. The electronic device of claim 8, wherein the internal circuitry (230) is configured to cause the one or more downstream ports (240) to obtain the upstream data from the respective one or more downstream cables while the one or more downstream ports (240) injects the deliverable power onto the respective one or more downstream cables.

10. The electronic device of any of claims 1 to 9, wherein the internal circuitry (230) is configured to detect, on the upstream port (210), an electrical connection to an upstream node;
in particular wherein the internal circuitry (230) is configured to cause the upstream port (210) to extract, from the upstream cable (i), the upstream power from the upstream node.

11. The electronic device of any of claims 1 to 10, comprising at least one of the following features: wherein the internal circuitry (230) is configured to cause the one or more downstream ports (240) to permit injection of the deliverable power into the respective one or more downstream cables;
wherein the one or more downstream ports (240) is configured to inject the deliverable power to a downstream node;
wherein the internal circuitry (230) is electrically connected to the upstream port (210) and the one or more downstream ports (240).

12. A method comprising:
connecting one or more downstream ports (240) to a respective one or more downstream cables;
connecting an upstream port (210) to an upstream cable (i);
causing, by internal circuitry (230) when the upstream port (210) extracts upstream power from the upstream cable (i), the upstream port (210) to extract the upstream power from the upstream cable (i); and
causing, by the internal circuitry (230) when the upstream port (210) extracts the upstream power from the upstream cable (i), the one or more downstream ports (240) to inject deliverable power into the respective one or more downstream cables.

13. The method of claim 12, wherein an electronic device comprises:
the upstream port (210);
the one or more downstream ports (240); and
the internal circuitry (230).

14. The method of claim 13, wherein an amount of available upstream power comprises an amount of electric power consumable by the electronic device;
in particular wherein the amount of the available upstream power comprises an amount of the deliverable power.

15. A non-transitory machine-readable storage medium having stored thereon machine-readable instructions that, when executed by internal circuitry (230), causes the internal circuitry (230) to perform a sequence of activities comprising:
causing, when an upstream port (210) extracts upstream power from an upstream cable (i), the upstream port (210) to extract the upstream power from the upstream cable (i); and
causing, when the upstream port (210) extracts the upstream power from the upstream cable (i), one or more downstream ports (240) to inject deliverable power into a respective one or more downstream cables.
